# EUROPÄISCHE PATENTSCHRIFT

(11) **EP 2 449 276 B1**
(45) Veröffentlichungstag und Bekanntmachung des Hinweises auf die Patenterteilung: **09.09.2015**
(21) Anmeldenummer: 10742708.0
(22) Anmeldetag: 01.07.2010
(51) Int. Cl.: F16C 41/00, H02K 7/18, H02K 7/09

(54) **LAGER MIT ENERGIEERZEUGUNGSEINHEIT**
BEARING HAVING A POWER GENERATION UNIT
PALIER À UNITÉ DE PRODUCTION D'ÉNERGIE

(30) Priorität: 03.07.2009 DE 102009031610; 28.04.2010 DE 102010018472
(43) Veröffentlichungstag der Anmeldung: 09.05.2012
(73) Patentinhaber: Schaeffler Technologies AG & Co. KG, 91074 Herzogenaurach (DE)
(72) Erfinder: RINK, Thomas, 97705 Waldfenster (DE); KLEIBER, Stefan, 97493 Bergrheinfeld (DE); KRAM, Martin, 97447 Gerolzhofen (DE)
(86) Internationale Anmeldenummer: PCT/DE2010/000762
(87) Internationale Veröffentlichungsnummer: WO 2011/000362

(56) Entgegenhaltungen:
- EP-A2- 1 177 959
- JP-A- 1 284 573
- US-A- 5 204 653
- US-A- 5 385 410
- US-A1- 2003 173 844

## Beschreibung

Die Erfindung betrifft ein Lager nach dem Oberbegriff von Anspruch 1.

Aus dem Stand der Technik sind Lager bekannt, die eine Energieerzeugungseinheit umfassen, die als Klauenpolgenerator ausgestaltet ist. Der Klauenpolgenerator umfasst eine Induktionsspule mit einem mit mehreren Windungen gewickelten elektrischen Leiter. Für eine auch bei geringen Drehzahlen ausreichende Spannungsversorgung soll die Induktionsspule einen hohen Füllfaktor aufweisen, also der elektrische Leiter möglichst eine hohe Anzahl von Windungen aufweisen.

US 6,838,794 B2 beschreibt ein Lager, insbesondere ein Wälzlager, mit einem ersten Lagerring, einem zweiten Lagerring und einer Energieerzeugungseinheit, die als Klauenpolgenerator ausgestaltet ist. Das Lager umfasst hierzu weiter einen an dem ersten Lagerring befestigten ersten Klauenring mit einer entlang eines Umfangs des ersten Lagerrings umlaufenden Abfolge von ersten Klauen, einen an dem ersten Lagerring befestigten zweiten Klauenring mit einer entlang des Umfangs des ersten Lagerrings umlaufenden Abfolge von zweiten Klauen, und eine zwischen den beiden Klauenringen angeordnete magnetische Induktionsspule. Das Lager umfasst weiter eine entlang eines Umfangs des zweiten Lagerrings umlaufende, als Magnetring ausgebildete Abfolge von magnetischen Polen sowie eine zwischen den beiden Klauenringen angeordnete magnetische Induktionsspule, wobei sich von einem ersten magnetischen Pol des Magnetrings über eine erste Klaue des ersten Klauenrings und über eine zweite Klaue des zweiten Klauenrings ein geschlossener, die Induktionsspule umlaufender magnetischer Kreis zu dem bezüglich des ersten magnetischen Pols ungleichnamigen zweiten magnetischen Pol des Magnetrings schließt. Drehen sich die beiden Lagerringe relativ zueinander, ändert sich der magnetische Fluss in dem magnetischen Kreis, da jede Klaue an einem anderen Pol vorbeigeführt wird. Die zeitliche Änderung des magnetischen Flusses induziert in der Induktionsspule eine Wechselspannung, deren Betrag von der Anzahl der Windungen der Induktionsspule abhängt. Um eine möglichst hohe Induktionsspannung zu erzielen, ist insbesondere eine große Anzahl von Windungen für die Induktionsspule vorzusehen. Die Induktionsspule ist in einer im Querschnitt U-förmigen Aufnahme angeordnet, wobei die Schenkel des U durch die beiden Klauenringe gebildet sind, und wobei die beiden Klauenringe durch den Boden des U miteinander in magnetisch leitender Verbindung stehen, so dass der magnetische Fluss durch die erste Klaue in dem ersten Schenkel des U, dann durch den Boden des U und danach durch eine zweite Klaue in dem zweiten Schenkel des U geführt wird. Der Boden des U liegt an dem ersten Lagerring an und reduziert den Bauraum zwischen den beiden Lagerringen, der für die Aufnahme einer möglichst hohen Anzahl von Windungen der Induktionsspule zur Verfügung steht. Als Maßnahme zur Erhöhung der Anzahl der Windungen der Induktionsspule wird vorgeschlagen, jeweils eine Ausnehmung an den beiden gegenüberliegenden Lagerringen vorzusehen und die Induktionsspule sowie die Abfolge der magnetischen Pole in der jeweiligen Ausnehmung anzuordnen, so dass die Induktionsspule einen vergrößerten Platz einnehmen kann. Hierzu sind bauliche Veränderungen an den beiden Mantelflächen der beiden Lagerringe erforderlich.

US 2005/0174011 A1 beschreibt ein als Wälzlager ausgebildetes Lager mit einem Klauenpolgenerator, wobei die als umlaufender Magnetring ausgebildete Abfolge der magnetischen Pole in einer Ausnehmung des zweiten Lagerrings angeordnet ist und die Induktionsspule im Querschnitt allseitig von den Blechzuschnitten der beiden Klauenringen umgeben abschnittsweise auf einer Stirnfläche des ersten Lagerrings aufsitzt bzw. abschnittsweise in einer in der Mantelfläche des ersten Lagerrings angeordneten Ausnehmung angeordnet ist. Das Lager umfasst weiter einen Sensor, speziell einen Drehzahlsensor, der von dem Klauenpolgenerator energetisch beaufschlagt wird, wobei der Sensor an dem Magnetring angeordnet ist.

### Aufgabe der Erfindung

Es ist die Aufgabe der Erfindung, ein Lager mit einer im wesentlichen bauraumneutralen Energieerzeugungseinheit mit einem hohen Füllfaktor für die Induktionsspule anzugeben.

### Zusammenfassung der Erfindung

Diese Aufgabe wird erfindungsgemäß für das Lager dadurch gelöst, dass jeder der beiden Klauenringe in magnetisch leitender Verbindung mit einem Abschnitt des Korpus des ersten Lagerrings angeordnet ist, und dass der magnetische Kreis im wesentlichen über den Abschnitt des Korpus des ersten Lagerrings geschlossen wird.

Eine bevorzugte Lösung der Aufgabe sieht die Verwendung eines magnetisch leitenden Klebers vor zur Befestigung eines Klauenrings oder eines magnetischen Pols, insbesondere eines mehrere magnetische Pole umfassenden Magnetrings, an einem magnetisch leitenden Korpus eines Lagerrings eines Wälzlagers.

Das Schließen des magnetischen Kreises über im wesentlichen den Abschnitt des Korpus des ersten Lagerringes, der zwischen den beiden Klauenringen angeordnet ist, ermöglicht, die Induktionsspule bis nahe an den ersten Lagerring heranzuführen, so dass sich die Anzahl der Windungen der Induktionsspule erhöht, ohne an dem ersten oder zweiten Lagerring eine bauliche Veränderung vornehmen zu müssen. Auf diese Weise lässt sich ein hoher sogenannter Füllfaktor für die Induktionsspule erreichen, so dass schon bei geringen Drehzahlen des Lagers eine hohe Spannung von der Induktionsspule abgegriffen werden kann.

Die Induktionsspule ist beispielsweise in einer im Querschnitt im wesentlichen U-förmigen Aufnahme angeordnet, wobei die beiden Schenkel des U durch die beiden Klauenringe ausgebildet ist, der Boden des U allerdings durch den als Abschnitt des magnetischen Kreises ausgebildeten Abschnitt des Korpus des ersten Lagerrings gebildet ist.

Sofern ein Grundkorpus des ersten Lagerrings aus einem magnetisch nicht oder nur schlecht leitenden Material wie Kunststoff oder Keramik ausgebildet ist, wird der magnetisch leitende Abschnitt beispielsweise durch eine auf das Grundkorpus aufgebrachte Beschichtung oder durch eine an das Grundkorpus angebrachte Hülse aus einem magnetisch leitenden Material ausgebildet, wobei die beiden Klauenringe dann mit der Beschichtung bzw. der Hülse in magnetisch leitende Verbindung gebracht werden.

Eine Baueinheit, umfassend die beiden Klauenringe, die Induktionsspule sowie eine Aufnahme aus einem magnetisch nicht-leitenden Material wie Kunststoff, mittels derer die Induktionsspule zwischen den Klauenringen fest angeordnet und aufgenommen ist, lässt sich einfach herstellen, beispielsweise indem die beiden Klauenringe sowie ein ringförmiger Platzhalter für die Induktionsspule in eine Spritzgußform eingebracht werden, der Zwischenraum zwischen den beiden Klauenringen um den Platzhalter herum mit dem Kunststoff gefüllt wird und dann der Platzhalter entfernt wird, so dass eine Höhlung entsteht, in die die Induktionsspule eingeführt werden kann. Das Einführen der Induktionsspule in die Höhlung kann beispielsweise durch einen Wickelprozess ausgeführt werden, bei dem lagenweise der elektrische Leiter als Draht in die Höhlung gewickelt wird, wobei die einzelnen Abschnitte des elektrischen Leiters beispielsweise mittels eines Lacks elektrisch voneinander isoliert sind. Die entstehende Baueinheit ist einseitig, nämlich zu der Fläche des magnetisch leitend ausgebildeten Abschnittes des ersten Lagerrings hin, offen. Das Material der Aufnahme, speziell der Kunststoff, kann die Induktionsspule mit den in der Isolierung aufgenommenen elektrischen Leitungen nicht vollständig umgeben, sondern insbesondere an der offenen Seite der Baueinheit eine Nut freilassen. Wird die Baueinheit an den ersten Lagerring so montiert, dass zwischen den beiden Klauenringen und dem den magnetischen Kreis schließenden Abschnitt des ersten Lagerrings eine magnetisch leitende Verbindung erzielt wird, bildet die Nut einen Hohlraum nahe der Wandung des Abschnittes des ersten Lagerrings, der die beiden Klauenringe insbesondere auch magnetisch isoliert, so dass der Hohlraum zusammen mit dem magnetisch nicht-leitenden Material der Aufnahme als magnetisch nicht-leitende Verbindung der beiden Klauenringe ausgestaltet ist. Es versteht sich, dass in den entstandenen Hohlraum magnetisch nicht-leitende Elemente wie beispielsweise eine Dichtung eingeführt werden können.

Vorzugsweise ist vorgesehen, dass mindestens einer der beiden Klauenringe ein kreisringförmiges Korpus mit einer radialen Schlitzung aufweist. Die radiale Schlitzung mindestens eines der beiden Klauenringe unterdrückt Wirbelströme und erhöht die Wirksamkeit der magnetischen Flussführung durch die beiden Klauen, die der Schlitzung benachbart sind. Weiter ermöglicht die Schlitzung, den Klauenring etwas zusammenzudrücken bzw. aufzuspreizen und zwischen die beiden Lagerringe einzuführen, so dass der Klauenring unter Vorspannung an dem ersten Lagerring anliegt und insbesondere eine große Grenzfläche zu dem ersten Lagerring ausgebildet wird, die die Führung des magnetischen Flusses aus oder in den den magnetischen Kreis schließenden Abschnitt des Korpus des ersten Lagerrings vereinfacht.

Vorzugsweise ist vorgesehen, dass der Klauenring zwischen zwei in Umfangsrichtung benachbarten Klauen eine Ausnehmung aufweist. Insbesondere kann vorgesehen sein, dass mindestens einer der Klauenringe nur die Klauen, ohne eine weitere stoffliche Verbindung zwischen benachbarten Klauen auszubilden, umfasst, so dass die Ausnehmung zwischen zwei benachbarten Klauen der Zwischenraum zwischen den beiden benachbarten Klauen ist. Auf diese Weise werden Wirbelstromverluste besonders wirksam unterdrückt. Umfasst der Klauenring ein kreisringförmiges Korpus, dessen Bestandteil die Klauen sind, wobei die Klauen in einer als Bohrung oder Schlitz in dem Abschnitt des Korpus des Kreisrings ausgebildeten Halterung aufgenommen sind, lassen sich entlang des gesamten Umfangs des Kreisrings Wirbelstromverluste in dem Klauenring nahe den Klauen unterdrücken.

Zur Unterdrückung der Wirbelströme in dem Kreisring kann weiter vorgesehen sein, dass das Korpus des Kreisrings aus einem elektrisch nicht-leitenden Material ausgebildet ist, wobei die Klauen aus dem magnetisch leitenden Material an das Korpus des Kreisrings befestigt sind. Der Klauenring kann beispielsweise ein Korpus aus einem Kunststoff oder einer biegsamen, dünnen Keramik umfassen, wobei die Klauen an das Korpus befestigt sind, beispielsweise in an dem Korpus vorgesehene Schlitze oder Passungen eingefügt sind, wobei das Korpus unter Ausbildung einer Dichtung sowie einer leichten Vorspannung an der Wandung des Abschnittes des ersten Lagerrings anliegt, der den magnetischen Kreis schließt.

Vorzugsweise ist vorgesehen, dass mindestens eine der Klauen des Klauenrings einen kreissegmentförmigen Umfangsabschnitt aufweist, und dass ein Radius des Kreissegmentes einem Radius des Umfangs des ersten Lagerrings entspricht. Die Kante im Bereich des kreissegmentförmigen Umfangsabschnitts der Klaue des Klauenrings legt sich dabei im wesentlichen formschlüssig an den zugeordneten Abschnitt des Lagerrings, so dass eine im wesentlichen linienhafte Grenzfläche zwischen der Klaue und dem Korpus des Lagerrings auftritt, die einen nur geringen magnetischen Widerstand innerhalb des geschlossenen magnetischen Kreises ausbildet.

Vorzugsweise ist vorgesehen, dass der Klauenring flächig an einem Umfangsabschnitt des Lagerrings anliegt. Aufgrund der flächigen, nicht nur linienhaften Anlage wird der magnetische Widerstand der der Grenzfläche der Klaue zu dem Korpus des Lagerrings reduziert. Die flächige Anlage der Klaue an dem Lagerring kann beispielsweise dadurch erreicht werden, dass die Klaue bzw. der Klauenring eine abgestellte Kontaktfläche aufweist, die flächig an einer Mantelfläche des Lagerrings anliegt.

Besonders bevorzugt ist vorgesehen, dass an einer Stirnfläche des Lagerrings eine in Umfangsrichtung umlaufende Aussparung angeordnet ist, und dass der Klauenring in der Aussparung abschnittsweise angeordnet ist. Dabei umfasst der Klauenring bzw. die Klaue einen im wesentlichen radial gerichteten, auf der Stirnfläche des ersten Lagerrings aufliegenden Flächenabschnitt. Eine derartige Maßnahme lässt sich ohne wesentliche bauliche Veränderung an dem ersten Lagerring bzw. an der Klaue oder dem Klauenring durchführen.

Vorzugsweise ist vorgesehen, dass an dem Klauenring ein magnetisch leitendes Kontaktelement zu dem angrenzenden Abschnitt des Korpus des Lagerrings angeordnet ist. Das Kontaktelement reduziert den magnetischen Widerstand in dem magnetischen Kreis an der der Kante mindestens eines der beiden Klauenringe zu dem Korpus des ersten Lagerrings.

Alternativ oder ergänzend zu einem an dem Klauenring angeordneten magnetisch leitenden Kontaktelement ist vorzugsweise vorgesehen, dass an mindestens einem der magnetischen Pole, insbesondere an dem Magnetring, ein magnetisch leitendes Kontaktelement zu dem angrenzenden Abschnitt des Korpus des Lagerrings angeordnet ist. Das Kontaktelement ermöglicht in diesem Falle ein Schließen des magnetischen Kreises zwischen den beiden Polen, insbesondere den Polen des Magnetrings.

Unabhängig davon, ob das magnetisch leitende Kontaktelement an dem Klauenring oder an mindestens einem der magnetischen Pole, insbesondere an dem Magnetring, vorgesehen ist, ist hinsichtlich der Ausbildung des Kontaktelementes besonders bevorzugt vorgesehen, dass das magnetisch leitende Kontaktelement einen flüssigen oder pastösen Kleber, insbesondere einen Eisen- oder Ferritpartikel enthaltenden Kleber, umfasst. Der Kleber füllt Spalte und Zwischenräume zwischen dem ersten Lagerring und der Klaue bzw. dem Klauenring aus. Weiter ermöglicht der Kleber eine einfache, ggf. zusätzliche, bei Bedarf fallsweise lösbare Befestigung der Klaue bzw. mindestens eines der beiden Klauenringe an dem ersten Lagerring, unter Herabsetzung des magnetischen Widerstandes an der ausgebildeten Grenzfläche zu dem ersten Lagerring. Der Kleber kann beispielsweise ein bekanntes Klebematerial umfassen, dem Eisen- oder Ferritpartikel, insbesondere als Späne, zugesetzt sind.

Vorzugsweise ist vorgesehen, dass das Lager weiter einen Sensor, insbesondere einen Drehzahlsensor, umfasst, der von der Energieerzeugungseinheit energetisch beaufschlagt ist, wobei der Sensor an dem ersten Lagerring befestigt ist. Die Anordnung des Sensors an dem ersten Lagerring, und damit beabstandet von den an dem zweiten Lagerring angeordneten Magneten, stellt sicher, dass der Sensor magnetisch nur gering beeinflusst ist. Der Sensor ist insbesondere bauraumneutral als flache Baueinheit angeordnet.

Bevorzugt ist hinsichtlich der Anordnung des Sensors vorgesehen, dass der Sensor eine Platine umfasst, und dass die Platine an einer Aufnahme für die Induktionsspule angeordnet ist. Die Aufnahme für die Induktionsspule kann insbesondere eine Aussparung aufweisen, innerhalb derer der Sensor angeordnet ist, so dass der Sensor mit der Aufnahme für die Induktionsspule bündig abschließend angeordnet ist.

Weitere Vorteile und Merkmale der Erfindung ergeben sich aus den abhängigen Ansprüchen sowie aus der Beschreibung von Ausführungsbeispielen.

Die Erfindung wird im folgenden unter Bezugnahme auf die anliegenden Zeichnungen näher beschrieben und erläutert.

### Kurze Beschreibung der Zeichnungen

- Fig. 1: zeigt eine Explosionsdarstellung eines Ausführungsbeispiels eines erfindungsgemäßen Lagers,
- Fig. 2: zeigt das Lager aus Fig. 1 in einer Querschnittsansicht
- Fig. 3: zeigt eine Querschnittsansicht eines zu Fig. 1 und 2 abgewandelten Ausführungsbeispiels.

### Detaillierte Beschreibung der Zeichnungen

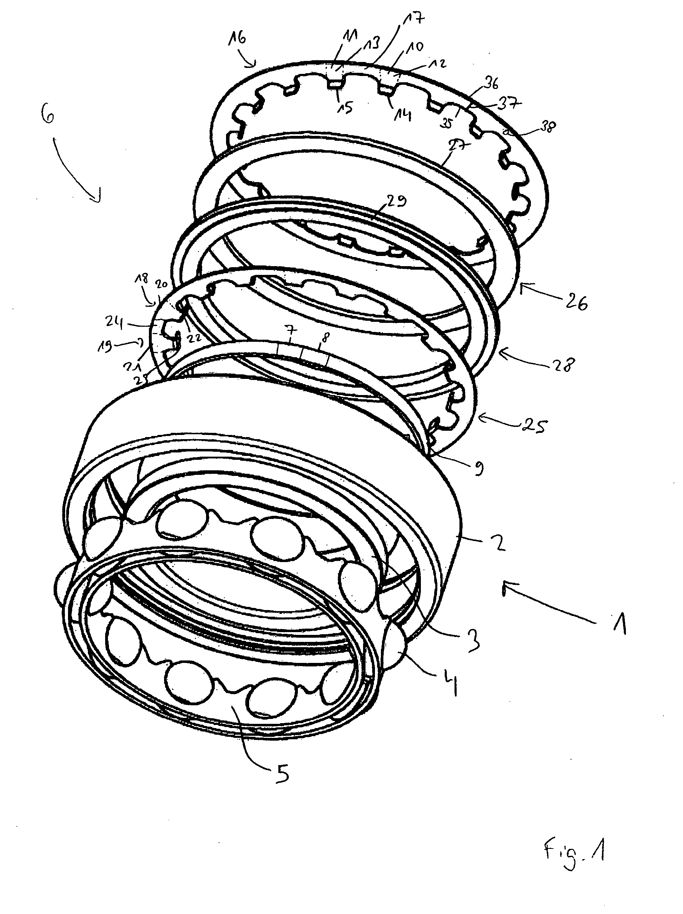

Fig. 1 zeigt ein als Wälzlager ausgebildetes Lager 1, das einen ersten, als Außenring des Lagers 1 ausgebildeten Lagerring 2 und einen zweiten, als Innenring des Lagers 1 ausgebildeten Lagerring 3 umfasst. Der zweite Lagerring 3 nimmt eine bildlich nicht dargestellte Welle auf und lagert diese Welle drehbar bezüglich einer bildlich nicht dargestellten Lageraufnahme, an der der erste Lagerring 2 fest angeordnet ist. Das Lager 1 umfasst weiter Wälzkörper 4, die in einem Käfig 5 zwischen den beiden Lagerringen 2, 3 angeordnet sind und eine Drehung des zweiten Lagerrings 3 relativ zu dem ersten Lagerring 2 ermöglichen.

Das Lager 1 umfasst weiter eine Energieerzeugungseinheit 6, die als Klauenpolgenerator ausgebildet ist.

Die Energieerzeugungseinheit 6 umfasst eine entlang eines Umfangs des zweiten Lagerrings 3 umlaufende Abfolge von magnetischen Polen, wobei zwei in Umfangsrichtung benachbarte, ungleichnamige Pole mit den Bezugszeichen 7 und 8 versehen sind. Die Pole sind zu einem Magnetring 9 zusammengefasst, der an dem zweiten Lagerring 3 befestigt ist, wobei die Pole, insbesondere die beiden in Umfangsrichtung benachbarten Pole 7, 8 als magnetisierte Abschnitte des Magnetrings 9 ausgebildet sind. Der Magnetring 9 umfasst eine entlang des Umfangs umlaufende Sicherungslage aus einer Wicklung von Glasfasern, die mit ausgehärtetem Epoxidharz zu einem Verbund verfestigt sind, so dass bei hohen Drehzahlen die in den Magnetring 9 eingelegten Magnete nicht herausgedrückt werden.

Die Energieerzeugungseinheit 6 umfasst weiter einen an dem ersten Lagerring 2 befestigten ersten Klauenring mit einer entlang eines Umfangs des ersten Lagerrings 2 umlaufenden Abfolge von ersten Klauen, wobei zwei in Umfangsrichtung benachbarte Klauen mit den Bezugszeichen 10, 11 ausgewiesen sind. Die ersten Klauen 10, 11 des ersten Klauenrings umfassen einen radial gerichteten, magnetisch leitenden Abschnitt 12, 13, sowie einen axial abgestellten, auf den Wälzkörper 4 weisenden, ebenfalls magnetisch leitenden Abschnitt 14, 15. Sämtliche ersten Klauen des ersten Klauenrings sind an einem ringförmigen Korpus 16 des ersten Klauenrings ausgebildet, so dass jeweils benachbarte erste Klauen 10, 11 mittels eines Zwischenabschnittes 17 verbunden sind.

Die Energieerzeugungseinheit 6 umfasst weiter einen an dem ersten Lagerring 2 befestigten zweiten Klauenring mit einer entlang des Umfangs des ersten Lagerrings umlaufenden Abfolge von zweiten Klauen, wobei zwei in Umfangsrichtung benachbarte zweite Klauen mit den Bezugszeichen 18, 19 versehen sind. Die zweiten Klauen 18,19 des zweiten Klauenrings umfassen jeweils einen radial gerichteten, magnetisch leitenden Abschnitt 20, 21 und jeweils einen von dem Wälzkörper 4 weg gerichteten axial abgestellten Abschnitt 22, 23, wobei die jeweils benachbarten zweiten Klauen 18, 19 des zweiten Klauenrings mittels eines weiteren Zwischenabschnittes 24 verbunden sind, so dass ein ringförmiges Korpus 25 des zweiten Klauenrings ausgebildet wird.

Die Energieerzeugungseinheit 6 umfasst weiter eine zwischen den beiden Klauenringen 16, 25 angeordnete magnetische Induktionsspule 26, die eine entlang des Umfangs der beiden Lagerringe 2, 3 umlaufende Wicklung eines bildlich nicht dargestellten elektrischen Leiters umfasst, wobei die Wicklungen des Leiters in einer kreisringförmigen Matrix aus einem elektrisch isolierenden Material, insbesondere einem Lack, aufgenommen sind. Die Induktionsspule 26 weist eine entlang des Umfangs umlaufende Spulennut 27 auf. Die Energieerzeugungseinheit 6 umfasst weiter eine Aufnahme 28 für die Induktionsspule 26 auf, wobei die Aufnahme 28 aus einem magnetisch nicht-leitenden Material wie einem Kunststoff ausgebildet ist. Die Aufnahme 28 weist ein kreisringförmiges Korpus auf, das einseitig offen ausgebildet ist und einen U-förmigen Querschnitt aufweist, so dass eine Nut 29 ausgebildet wird, in die die Induktionsspule 26 eingelegt wird.

Die Induktionsspule 26, die Aufnahme 28 sowie die beiden Klauenringe 16, 25 bilden eine Baueinheit, wobei die Induktionsspule 26 in der Nut 29 der Aufnahme 28 aufgenommen ist, wobei die Zwischenabschnitte 17 und die radialen Abschnitte 12, 13 der ersten Klauen des ersten Klauenrings 16 außen an einem ersten Schenkel des U der Aufnahme 28 angeordnet sind, und wobei die weiteren Zwischenabschnitte 24 sowie die radialen Abschnitte 20, 21 der zweiten Klauen 18, 19 des zweiten Klauenrings 25 an dem zweiten Schenkel des U der Aufnahme 28 angeordnet sind. Der Boden des U der Aufnahme 28 ist radial innenliegend, bezogen auf die Drehachse, angeordnet, so dass der einseitig offene Abschnitt des U der Aufnahme 28, der durch die Nut 29 definiert ist, auf den ersten Lagerring 2 weist, an dem die Baueinheit befestigt ist.

Die beiden Klauenringe 16, 25 sind relativ zueinander so angeordnet, dass die jeweiligen Klauen in Umfangsrichtung zueinander versetzt sind. Insbesondere ist der axiale Abschnitt 22 der zweite Klaue 18 des zweiten Klauenrings 25 in Umfangsrichtung mittig zwischen den axialen Abschnitten 14, 15 der ersten Klauen 10, 11 des ersten Klauenrings 16 angeordnet. Weiter sind die Klauen bezogen auf die magnetischen Pole 7, 8 des Magnetrings 9 so angeordnet, dass der axiale Abschnitt 22 der zweiten Klaue 18 des zweiten Klauenrings 25 dem ersten Pol 7 und der axiale Abschnitt 14 der ersten Klaue 10 des ersten Klauenrings 16 dem im Umfangsrichtung benachbarten, ungleichnamigen Pol 8 im wesentlichen radial gegenübersteht, so dass die Feldlinien eines Magnetfeldes von dem ersten Pol 7 über den axialen Abschnitt 22 und den radialen Abschnitt 20 der zweiten Klaue 18 in einen Abschnitt des ersten Lagerrings 2 eintreten und über den radialen Abschnitt 12 sowie den axialen Abschnitt 14 der ersten Klaue 10 zu dem zweiten Pol 8 einen geschlossenen magnetischen Kreis ausbilden, der die Induktionsspule 26 umläuft. Ändert sich das die Induktionsspule 26 umlaufende Magnetfeld, beispielsweise bei der Drehung des ersten Lagerrings 2 relativ zu dem zweiten Lagerring 3, wird in der Induktionsspule 26 eine Wechselspannung induziert, die an den Enden der Induktionsspule abgegriffen werden kann, und als Energieversorgung bzw. zur Erfassung der Drehbewegung verwertet werden kann.

Der in Fig. 1 dargestellte erste Klauenring 16 weist weiter zwischen zwei in Umfangsrichtung benachbarten Klauen eine Ausnehmung 38 auf, wobei die Ausnehmung 38 als kreisförmige oder auch linienhafte Durchbohrung in dem Zwischenbereich 17 zwischen zwei in Umfangsrichtung benachbarten ersten Klauen ausgebildet ist. Derartige Ausnehmungen sind in sämtlichen Zwischenbereichen 17 vorgesehen, allerdings nur für einen der Zwischenbereiche 17 bildlich dargestellt. Es versteht sich, dass Ausnehmungen auch für das kreisringförmige Korpus 25 des zweiten Klauenrings vorgesehen sein können. Die Ausnehmungen 38 unterdrücken dabei das Auftreten von Wirbelströmen zwischen zwei in Umfangsrichtung benachbarten Klauen eines Klauenrings und vergrößern die Luftspaltabstände zwischen zwei in Umfangsrichtung benachbarten Klauen der beiden Klauenringe 16, 25.

Der in Fig. 1 dargestellte erste Klauenring 16 weist ein Korpus auf, das eine radiale, sich von einer inneren Berandung 35 zu einer äußeren Berandung 36 des kreisringförmigen Korpus 16 erstreckenden Schlitzung 37 in einem Zwischenbereich 17 zwischen zwei in Umfangsrichtung benachbarten ersten Klauen aufweist. Entsprechend kann der zweite Klauenring 25 ebenfalls eine bildlich nicht dargestellte Schlitzung aufweisen. Die Schlitzung 37 ermöglicht ein Zusammendrücken des Korpus 16, so dass der erste Klauenring unter radialer Vorspannung an der Innenwandung 34 des ersten Lagerrings 2 eingespannt werden kann.

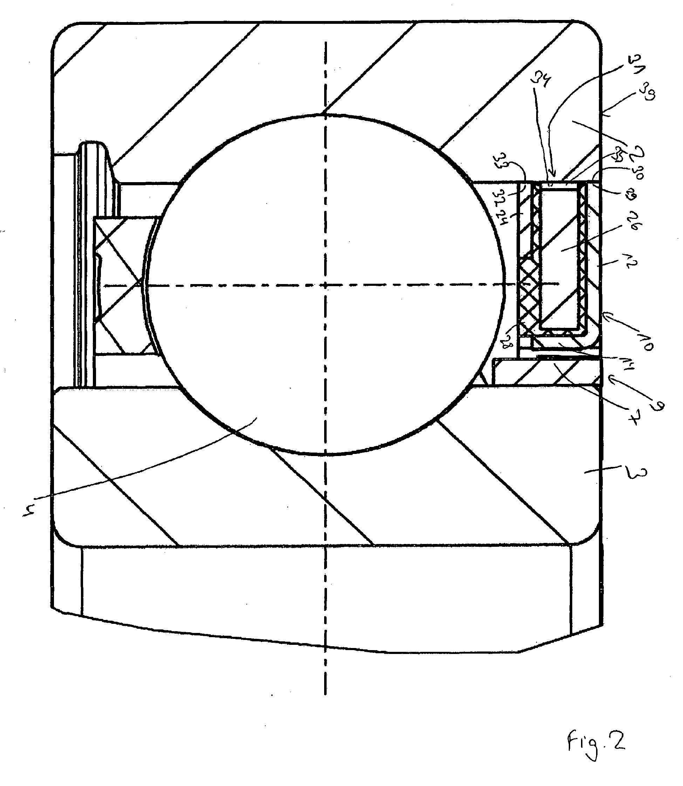

Fig. 2 zeigt eine Querschnittsansicht des Lagers 1 aus Fig. 1 in einer Stellung, bei der die Energieerzeugungseinheit 6 an dem ersten Lagerring 2 sowie an dem zweiten Lagerring 3 fest angeordnet ist. Die Schnittebene der Darstellung in Fig. 2 ist so gelegt, dass der Schnitt durch die erste Klaue 10 des ersten Klauenrings 16 geführt ist. Die der ersten Klaue 10 des ersten Klauenrings 16 in Umfangsrichtung nächsten Klauen, nämlich die zweiten Klauen 18, 19 des zweiten Klauenrings 25 sind oberhalb bzw. unterhalb der Papierebene angeordnet. Von dem zweiten Klauenring 25 ist damit nur der weitere Zwischenabschnitt 24 des Korpus des zweiten Klauenrings 25 erkennbar.

Die Schnittebene der Darstellung aus Fig. 2 ist weiter so gelegt, dass die in Fig. 1 erkennbare Ausnehmung 38 bzw. die Schlitzung 37 nicht erkennbar ist.

Der axiale Abschnitt 14 der ersten Klaue 10 ist den ersten magnetischen Pol 7 des Magnetrings 9 radial gegenüberstehend, unter Belassen eines kleinen Spaltes, angeordnet. Der radiale Abschnitt 12 der ersten Klaue 10 liegt mit einer Kante 29 an einer Gegenkante 30 des Korpus des ersten Lagerrings 2 an. Die Kante 29 bildet mit der Gegenkante 30 eine Grenzfläche aus, über die hinweg das Magnetfeld in einen Abschnitt 31 des Korpus des ersten Lagerrings 2 eintreten kann.

Der zweite Klauenring 25 liegt im Bereich des weiteren Zwischenabschnittes 24 ebenfalls mit einer Kante 32 an einer Gegenkante 33 des Korpus des ersten Lagerrings 2 an. Der magnetisch leitende Abschnitt 31 des ersten Lagerrings 2 wird dadurch im wesentlichen durch die beiden Kanten 32, 29 der beiden Klauenringe 16, 25 begrenzt.

Entlang der Kante 29 liegt die erste Klaue 10 im wesentlichen linienförmig an dem Korpus des ersten Lagerrings 2 an. Hierzu ist vorgesehen, dass die erste Klaue 10 des ersten Klauenrings 16 einen kreissegmentförmigen Umfangsabschnitt aufweist, und dass ein Radius des Kreissegmentes einem Radius des Umfangs des ersten Lagerrings 2 entspricht. Insbesondere weist das gesamte kreisringförmige Korpus 16 des ersten Lagerrings 2 eine ringförmig umlaufende Kante auf, die abschnittsweise der Kante 29 der ersten Klaue 10 entspricht, wobei der Außenradius des kreisringförmigen Korpus 16 im wesentlichen dem Innenradius des ersten Lagerrings 2 entspricht. Es versteht sich, dass auch für die zweiten Klauen des zweiten Klauenrings vorgesehen sein kann, dass die jeweilige zweite Klaue einen kreissegmentförmigen Umfangsabschnitt aufweist, und dass ein Radius des Kreissegmentes einem Radius des Umfangs des ersten Lagerrings 2 entspricht. Da die zweiten Klauen des zweiten Klauenrings 25 als Abschnitte des kreisringförmigen Korpus 25 ausgebildet sind, ist entsprechend vorgesehen, dass ein Außenradius des Korpus des zweiten Klauenrings 25 einem Innenradius des ersten Lagerrings 2 entspricht.

Die beiden Klauenringe 16, 25 sind magnetisch nicht-leitend durch den Kunststoff der Aufnahme 28 sowie die Harzmatrix der Induktionsspule 26 voneinander beabstandet gehalten. Weiter ist zwischen der radial nach außen weisenden Seite des U-förmigen Querschnittes der Aufnahme 28 und einer Innenwandung 34 des magnetisch leitenden Abschnittes 31 des Korpus des zweiten Lagerrings 2 ein Abstand eingehalten, so dass ein entlang des Umfangs umlaufender Hohlraum ausgebildet wird, der die beiden Kanten 29, 32 der beiden Klauen der beiden Klauenringe 16, 25 trennt, einen magnetischen Kurzschluss zwischen den beiden Klauenringen 16, 25 verhindert und eine magnetische Flussführung zwischen den Kanten 29, 32 durch den magnetisch leitenden Abschnitt 31 erzwingt. In den Hohlraum kann ein magnetisch nicht-leitendes Material, beispielsweise ein Dichtmaterial auf Kunststoffbasis, eingeführt sein. Alternativ hierzu kann der Hohlraum zur Befüllung mit dem Dichtmaterial evakuiert werden, um die Montage der Baueinheit mit den beiden Klauenringen 16, 25 und der Induktionsspule 26 zu erleichtern.

Fig. 2 lässt erkennen, dass die Energieerzeugungseinheit 6 an der im wesentlichen hohlzylindrischen inneren Mantelfläche des Korpus des ersten Lagerrings 2 unmittelbar festgelegt ist, beispielsweise mittels Presssitz, ohne an der hohlzylindrischen Form der inneren Mantelfläche geometrische Veränderungen zur Aufnahme der Energieerzeugungseinheit 6 vorgenommen zu haben. Weiter ist erkennbar, dass der radiale Abschnitt 12 der ersten Klaue 10 des ersten Klauenrings mit dem kreisringförmigen Korpus 16 im wesentlichen bündig mit der Stirnfläche 39 des ersten Lagerrings 2 abschließt. Ebenfalls ist der Magnetring 9 an der zylindrischen äußeren Mantelfläche des zweiten Lagerrings 3 angeordnet und schließt mit dessen Stirnfläche ebenfalls bündig ab, so dass die Energieerzeugungseinheit 6 im wesentlichen bauraumneutral bezogen auf das Lager 1 mit den Lagerringen 2, 3 angeordnet ist. Die Induktionsspule 26 reicht bis nahe an die Innenwandung 34 des magnetisch leitenden Abschnittes 31 des Korpus des ersten Lagerrings 2 heran, so dass ein hoher Füllfaktor erzielt werden kann, der auch bei geringen Drehzahlen eine ausreichende Ausgangsspannung des in der Induktionsspule 26 aufgenommenen elektrischen Leiters ermöglicht.

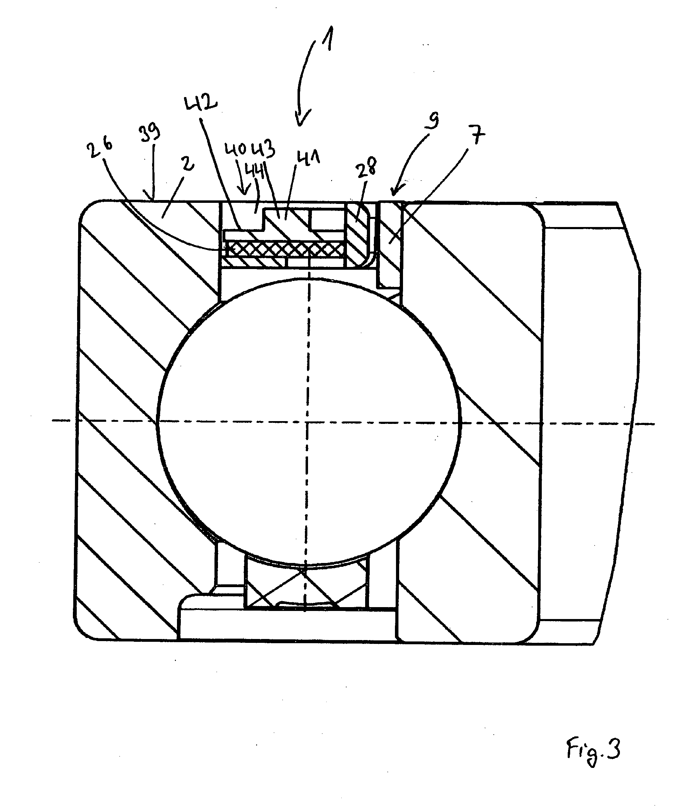

Fig. 3 zeigt ein zu dem in Fig. 1 und 2 dargestellten Ausführungsbeispiel abgewandeltes Ausführungsbeispiel, bei dem das Lager 1 zusätzlich einen Sensor 41, nämlich einen Drehzahlsensor mit integrierter Temperaturerfassungseinheit sowie einer Antenne, umfasst. Im folgenden bezeichnen daher gleiche Bezugszeichen gleiche oder in ihrer technischen Funktion vergleichbare Merkmale.

Einem ersten magnetischen Pol 7 eines Magnetrings 9 gegenüberliegend, also an dem als Außenring des Lagers 1 ausgebildeten ersten Lagerring 2 ist in einer Aufnahme 28 für eine Induktionsspule 26 eine sich entlang eines Abschnittes des Umfangs des ersten Lagerrings 2 erstreckende Aussparung 40 vorgesehen, in die der Sensor 41 aufgenommen ist. Die Aussparung 40 erstreckt sich dabei über einige der Klauen des Klauenrings. Der Sensor 41 umfasst eine Platine 42, auf der elektronische Bauelemente 43, beispielsweise ein Kondensator, eine Temperaturfühleinheit sowie eine Antenne, angeordnet sind. Die Platine 42 ist an die Induktionsspule 26 angrenzend in der Aussparung 40 der Aufnahme 28 für die Induktionsspule 26 angeordnet, ohne die Induktionsspule 26 selbst in ihrem Bauraum zu beschränken. Hierzu ist einer der beiden Schenkel der im Querschnitt im wesentlichen U-förmigen Aufnahme fortgelassen, so dass die Platine 42 anstelle des fortgelassenen Schenkels angeordnet ist. Die Platine 42 ist von einer Vergussmasse 44 bedeckt, wobei die Vergussmasse 44, beispielsweise eine erhärteter Lack, bündig mit einer Stirnfläche 39 des ersten Lagerrings 2 abschließt. Die Aufnahme 28 der Induktionsspule 26 und somit die Platine 42 des Sensors 41 ist fest an dem ersten Lagerring 2 befestigt. Der Sensor 41 ist mechanisch geschützt aufgenommen, so dass eine Schmierung des Lagers 1 möglich ist, ohne den Sensor 41 zu beeinträchtigen.

Der Sensor 41 wird von der in der Induktionsspule 26 erzeugten Wechselspannung energetisch beaufschlagt. Der Sensor 41 ist damit insbesondere energetisch autark und kann von dem Sensor 41 erfasste Messdaten, insbesondere also Informationen über die Drehzahl, die Temperatur sowie die Betriebsdauer, kabellos über größere Entfernungen an einen entfernten Empfänger übermitteln.

Der Sensor 41 umfasst dabei eine Zuleitung von der Induktionsspule 26 bzw. einem durch die Induktionsspule 26 gespeisten Generator, wobei die Zuleitung in einem ersten Zweig eine Stromversorgungseinheit für einen Speicher sowie die genannte Temperaturfühleinheit sowie einen Mikroprozessor versorgt, und in einem zweiten Zweig die von der Induktionsspule 26 bzw. dem Generator gelieferte, in ihrer Frequenz von der relativen Drehzahl der beiden Lagerringe 2, 3 abhängige Spannung an eine Drehzahlerfassungseinheit liefert, wobei die Drehzahlerfassungseinheit beispielsweise aus der Frequenz der Spannung auf die Drehzahl des Lagers 1 schließen lässt. Die Induktionsspule 26 liefert damit sowohl die elektrische Energie für den Sensor 41, insbesondere für die Sensorelemente des ersten Zweiges, als auch die Eingangsgröße für den zweiten Zweig des Sensors 41, wobei die Drehzahlerfassungseinheit des Sensors 41 aus der Eingangsgröße des zweiten Zweiges die Drehzahl des Lagers 1 ermittelt. Die Drehzahlerfassungseinheit ist damit diejenige Komponente des Sensors 41, die die relative Drehzahl der beiden Lagerringe 2, 3 des Lagers 1 ermittelt, und zwar aus der Periode (bzw. der Frequenz) und / oder der Amplitude der von der Induktionsspule 26 gelieferten Spannung.

Die Messergebnisse der Drehzahlerfassungseinheit in dem zweiten Zweig sowie die Messergebnisse der Temperaturfühleinheit in dem ersten Zweig sowie Daten aus dem Speicher in dem ersten Zweig werden in dem Mikroprozessor zusammengeführt und ausgewertet, wobei der Mikroprozessor ein Signal an eine Sende- und Empfangseinheit abgibt, die ihrerseits ebenfalls von der Stromversorgungseinheit im dem ersten Zweig beaufschlagt ist. Die Sende- und Empfangseinheit übermittelt auf einer Frequenz von beispielsweise 868 Megahertz Signale an eine Antenne, die als PCB (printed circuit board)-Antenne auf der Platine 42 angeordnet ist. Ein Quarz als Taktgeber für die Antenne, die Antenne selbst, sowie eine Antennenanpassung sind als elektronische Bauelemente auf der Platine 42 ausgebildet. Die Temperaturfühleinheit, der Mikroprozessor, die Drehzahlerfassungseinheit, die Stromversorgung sowie der Speicher sind ebenfalls als elektronische Bauelemente, beispielsweise als das Bauelement 43 in Fig. 3, auf der Platine 42 angeordnet. Der Sensor 41 kann über die Antenne sowohl senden als auch von außen angesprochen werden, um beispielsweise Daten zu übermitteln oder aktiv Messwerte zu erfassen und Messergebnisse zu ermitteln und zu übermitteln. Insbesondere ist vorgesehen, dass der Sensor 41 die Drehzahlerfassungseinheit, die Temperaturfühleinheit sowie die Sende- und Empfangseinheit umfasst, die jeweils von der Energieerzeugungseinheit 6 energetisch beaufschlagt sind. Der Sensor 41 ist damit eine Baueinheit, die von der Energieerzeugungseinheit 6 des Lagers als einzige, für sämtliche Komponenten des Sensors 41 gemeinsame Energiequelle energetisch versorgt wird. Die Antenne lässt sich dabei auf eine Distanz von einigen Metern, bis zu einem Abstand von ca. fünfzehn Metern Entfernung, ansprechen und auslesen.

Bei dem vorstehend beschriebenen Ausführungsbeispiel lagen die beiden Klauenringe 16, 25 jeweils entlang der Kanten 29, 32 der Klauen 10 und damit jeweils linienhaft an der Innenwandung 34 des ersten Lagerrings 2 an. Es versteht sich, dass vorgesehen sein kann, dass mindestens einer der beiden Klauenringe 16, 25 flächig an einem Umfangsabschnitt des ersten Lagerrings 2 anliegt. Hierzu kann die jeweilige Klaue bzw. der jeweilige Klauenring einen axial abgestellten Abschnitt im Bereich der äußeren Berandung 36 aufweisen, mit dem die jeweilige Klaue bzw. der jeweilige Klauenring 16, 25 flächig an der Innenwandung 34 des Korpus des ersten Lagerrings 2 anliegt.

Alternativ oder ergänzend kann zur Ausbildung der flächigen Anlage mindestens eines der beiden Klauenringe an einem Umfangsabschnitt des ersten Lagerrings 2 vorgesehen sein, dass der jeweilige radiale Abschnitt 12, 13 der ersten Klauen 10, 11 bzw. des ersten Klauenrings 16 auf einer Stirnfläche 39 des ersten Lagerrings 2 aufliegt; speziell kann vorgesehen sein, dass an der Stirnfläche 39 des ersten Lagerrings 2 eine in Umfangsrichtung umlaufende Aussparung angeordnet ist, und dass der Klauenring in der Aussparung abschnittsweise angeordnet ist, so dass der in der Aussparung aufgenommene Abschnitt über die angrenzende Stirnfläche 39 nicht vorsteht.

Bei dem vorstehend beschriebenen Ausführungsbeispiel waren die ersten Klauen 10, 11 des ersten Klauenrings 16 mittels der Zwischenbereiche 17 zu dem im wesentlichen kreisringförmigen Korpus 16 des ersten Klauenrings verbunden. Es versteht sich, dass die Zwischenbereiche 17 auch fortgelassen sein können, so dass der erste Klauenring aus einer umlaufenden Abfolge von miteinander nicht mehr verbundenen einzelnen ersten Klauen ausgebildet ist. Die einzelnen ersten Klauen 10, 11 des ersten Klauenrings können ebenfalls durch einen Zwischenbereich 17 zu einem einzigen Klauenring verbunden sein, wobei der Zwischenbereich 17 aus einem magnetisch nicht-leitenden Material, beispielsweise einem Kunststoff ausgebildet ist. Insbesondere können die flach ausgebildeten radialen Abschnitte 12, 13 der ersten Klauen 10, 11 an den Seitenkanten in Führungsnuten in dem Kunststoff eingeführt und in diesen Führungsnuten radial verschieblich aufgenommen sein, um eine feste Anlage an den magnetisch leitenden Abschnitt 31 des Korpus des ersten Lagerrings 2 ausbilden zu können. Es versteht sich, dass eine entsprechende Ausgestaltung auch für die zweiten Klauen 18, 19 des zweiten Klauenrings 25 vorgesehen sein kann.

Bei dem vorstehend beschriebenen Ausführungsbeispiel lagen die Klauenringe 16, 25 bzw. die Klauen 10, 11, 18, 19 mit den Kanten 29, 32 jeweils an Gegenkanten 30, 33 des Korpus des ersten Lagerrings 2 an. Es versteht sich, dass an dem Korpus des ersten Lagerrings 2 auch Aufnahmenuten vorgesehen sein können, die die Kanten 29, 32 aufnehmen und die Kanten 29, 32 mehrseitig umgeben.

Bei dem vorstehend beschriebenen Ausführungsbeispiel wiesen die axialen Abschnitte 14, 15 der ersten Klauen 10, 11 des ersten Klauenrings 16 bzw. die axialen Abschnitte 22, 23 der zweiten Klauen 18, 19 des zweiten Klauenrings 25 einen jeweils trapezförmigen Umriss auf, in einer radialen, von der Lagerachse weg weisenden Blickrichtung. Ein derartiger trapezförmiger Umriss vermeidet Lagergeräusche, insbesondere bei schnelldrehendem Betrieb des Lagers 1. Es versteht sich, dass die Klauen auch eine andere Gestaltung aufweisen können. Insbesondere können sich die Klauen 10, 11 bzw. 18, 19 nur auf die radialen Abschnitte 12, 13 bzw. 20, 21 beschränken.

Aus dem Stand der Technik bekannte Lagerringe umfassen in einigen Fällen eine entlang des Umfangs umlaufende Dichtungsnut. An einer solchen Dichtungsnut kann die Baueinheit bestehend aus den beiden Klauenringen 16, 25 sowie der Induktionsspule 26 mit der Aufnahme 28 festgelegt werden, beispielsweise indem ein Dichtelement an der Aufnahme 28, der Induktionsspule 26 oder einem der beiden Klauenringe 16, 25 befestigt ist und das Dichtelement in der Dichtungsnut festgelegt wird. Anstelle des Dichtelementes oder ergänzend zu dem Dichtelement kann ein magnetisch leitendes Kontaktelement, beispielsweise in Form eines flüssigen oder pastösen Klebers, vorgesehen sein, das einen Hohlraum zwischen dem Dichtelement und einem der beiden Klauenringe ausfüllt und die magnetisch leitende Verbindung zwischen den einen der beiden Klauenringe und dem magnetisch leitenden Abschnitt des Korpus des Lagerrings 2 verbessert oder erst herstellt. Das Kontaktelement hält jedoch zu dem anderen der beiden Klauenringe einen Abstand ein, so dass der magnetische Kreis über den magnetisch leitenden Abschnitt 31 des Korpus des ersten Lagerrings 2 und nicht direkt zwischen den beiden Klauenringen 16, 25 geschlossen wird.

Bei dem vorstehend beschriebenen Ausführungsbeispiel war die Klauenringe 16, 25 an dem als Außenring ausgebildeten ersten Lagerring 2 und der Magnetring 9 mit den magnetischen Polen 7, 8 an dem zweiten, als Innenring ausgebildeten Lagerring 3 befestigt. Dabei wurde angenommen, dass der Innenring 3 drehend in dem feststehenden Außenring 2 angeordnet ist, so dass die Klauenringe 16, 25 bezüglich des Magnetrings 9 feststehen. Alternativ hierzu kann vorgesehen sein, dass der Magnetring 9 feststeht und die Klauenringe 16, 25 bezüglich des Magnetrings 9 umlaufen. Speziell kann vorgesehen sein, dass die Klauenringe 16, 25 an einem sich drehenden Innenring bezüglich des feststehenden Außenrings angeordnet sind. Eine derartige Anordnung ermöglicht die Bereitstellung von elektrischer Energie an dem sich drehenden Innenring und vermeidet eine Stromführung zwischen den beiden Lagerringen, beispielsweise über Schleifkontakte. In diesem Fall ist die Aufnahme 28 für die Induktionsspule 26 an dem Innenring befestigt und beispielsweise zweiteilig ausgeführt, wobei die Induktionsspule als vorgefertigte Einheit zwischen die beiden Teile der Aufnahme eingelegt wird und anschließend die beiden Teile der Aufnahme beispielsweise mittels einer Clips- oder Rastverbindung zu der Aufnahme gefügt werden.

### Bezugszeichenliste

- 1: Lager
- 2: erster Lagerring
- 3: zweiter Lagerring
- 4: Wälzkörper
- 5: Käfig
- 6: Energieerzeugungseinheit
- 7: magnetischer Pol
- 8: magnetischer Pol
- 9: Magnetring
- 10: Klaue des ersten Klauenrings
- 11: Klaue des ersten Klauenrings
- 12: radialer Abschnitt der Klaue 10
- 13: radialer Abschnitt der Klaue 11
- 14: axialer Abschnitt der Klaue 10
- 15: axialer Abschnitt der Klaue 11
- 16: Korpus des ersten Klauenrings
- 17: Zwischenabschnitt
- 18: Klaue des zweiten Klauenrings
- 19: Klaue des zweiten Klauenrings
- 20: radialer Abschnitt der Klaue 18
- 21: radialer Abschnitt der Klaue 19
- 22: axialer Abschnitt der Klaue 18
- 23: axialer Abschnitt der Klaue 19
- 24: weiterer Zwischenabschnitt
- 25: Korpus des zweiten Klauenrings
- 26: Induktionsspule
- 27: Spulennut
- 28: Aufnahme
- 29: Kante
- 30: Gegenkante
- 31: Abschnitt des Korpus des ersten Lagerrings 2
- 32: Kante
- 33: Gegenkante
- 34: Innenwandung des Abschnittes 31
- 35: innere Berandung des Korpus 16
- 36: äußere Berandung des Korpus 16
- 37: radiale Schlitzung
- 38: Ausnehmung
- 39: Stirnfläche
- 40: Aussparung
- 41: Sensor
- 42: Platine
- 43: elektronisches Bauelement
- 44: Vergussmasse

## Patentansprüche

1. Lager mit einem ersten Lagerring (2) und einem zweiten Lagerring (3) sowie mit einer Energieerzeugungseinheit (6), wobei die Energieerzeugungseinheit (6) umfasst:
eine entlang eines Umfangs des zweiten Lagerrings (3) umlaufende Abfolge von magnetischen Polen (7, 8),
einen an dem ersten Lagerring (2) befestigten ersten Klauenring (16) mit einer entlang eines Umfangs des ersten Lagerrings (2) umlaufenden Abfolge von ersten Klauen (10, 11),
einen an dem ersten Lagerring (2) befestigten zweiten Klauenring (25) mit einer entlang des Umfangs des ersten Lagerrings (2) umlaufenden Abfolge von zweiten Klauen (18, 19), und eine zwischen den beiden Klauenringen (16, 25) angeordnete magnetische Induktionsspule (26),
wobei sich von einem ersten magnetischen Pol (7) über eine erste Klaue (10, 11) des ersten Klauenrings (16) und über eine zweite Klaue (18, 19) des zweiten Klauenrings (25) ein geschlossener, die Induktionsspule (26) umlaufender magnetischer Kreis zu dem zweiten magnetischen Pol (8) schließt,
**dadurch gekennzeichnet,**
**dass** jeder der beiden Klauenringe (16, 25) in magnetisch leitender Verbindung mit einem Abschnitt (31) des Korpus des ersten Lagerrings (2) angeordnet ist, und
**dass** der magnetische Kreis im wesentlichen über den Abschnitt (31) des Korpus des ersten Lagerrings (2) geschlossen wird.

2. Lager nach Anspruch 1, **dadurch gekennzeichnet, dass** der Klauenring ein kreisringförmiges Korpus (16) mit einer radialen Schlitzung (37) aufweist.

3. Lager nach Anspruch 1 oder 2, **dadurch gekennzeichnet, dass** der Klauenring zwischen zwei in Umfangsrichtung benachbarten Klauen eine Ausnehmung (38) aufweist.

4. Lager nach einem der Ansprüche 1 bis 3, **dadurch gekennzeichnet, dass** eine der Klauen (10) eines der Klauenring (16) einen kreissegmentförmigen Umfangsabschnitt aufweist, und dass ein Radius des Kreissegmentes einem Radius des Umfangs des ersten Lagerrings (2) entspricht.

5. Lager nach einem der Ansprüche 1 bis 4, **dadurch gekennzeichnet, dass** der Klauenring flächig an einem Umfangsabschnitt des ersten Lagerrings anliegt.

6. Lager nach Anspruch 5, **dadurch gekennzeichnet, dass** an einer Stirnfläche (39) des ersten Lagerrings (2) eine in Umfangsrichtung umlaufende Aussparung angeordnet ist, und dass der Klauenring in der Aussparung abschnittsweise angeordnet ist.

7. Lager nach einem der Ansprüche 1 bis 6, **dadurch gekennzeichnet, dass** an dem Klauenring ein magnetisch leitendes Kontaktelement zu dem angrenzenden Abschnitt des Korpus des Lagerrings angeordnet ist.

8. Lager nach einem der Ansprüche 1 bis 7, **dadurch gekennzeichnet, dass** an mindestens einem der magnetischen Pole, insbesondere an dem Magnetring, ein magnetisch leitendes Kontaktelement zu dem angrenzenden Abschnitt des Korpus des Lagerrings angeordnet ist.

9. Lager nach Anspruch 7 oder 8, **dadurch gekennzeichnet, dass** das magnetisch leitende Kontaktelement einen flüssigen oder pastösen Kleber, insbesondere einen Eisen- oder Ferritpartikel enthaltenden Kleber, umfasst.

10. Lager nach einem der Ansprüche 1 bis 9, weiter umfassend einen Sensor (41), insbesondere einen Drehzahlsensor, der von der Energieerzeugungseinheit (6) energetisch beaufschlagt ist, wobei der Sensor (41) an dem ersten Lagerring (2) befestigt ist.

11. Lager nach Anspruch 10, **dadurch gekennzeichnet, dass** der Sensor (41) eine Platine (42) umfasst, und dass die Platine (42) an einer Aufnahme (28) für die Induktionsspule (26) angeordnet ist.

12. Lager nach Anspruch 10 oder 11, **dadurch gekennzeichnet, dass** der Sensor (41) eine Drehzahlerfassungseinheit, eine Temperaturfühleinheit sowie eine Sende- und Empfangseinheit umfasst, die von der Energieerzeugungseinheit (6) energetisch beaufschlagt sind.

## Claims

1. Bearing having a first bearing ring (2) and a second bearing ring (3) and having a power generation unit (6), the power generation unit (6) comprising:
a sequence of magnetic poles (7, 8) running peripherally along a circumference of the second bearing ring (3),
a first claw ring (16) fastened to the first bearing ring (2) and having a sequence of first claws (10, 11) running peripherally along a circumference of the first bearing ring (2),
a second claw ring (25) fastened to the first bearing ring (2) and having a sequence of second claws (18, 19) running peripherally along the circumference of the first bearing ring (2), and
a magnetic induction coil (26), which is arranged between the two claw rings (16, 25),
wherein a closed magnetic circuit, running peripherally around the induction coil (26), to the second magnetic pole (8) is closed by a first magnetic pole (7) via a first claw (10, 11) of the first claw ring (16) and via a second claw (18, 19) of the second claw ring (25),
**characterized in that**
each of the two claw rings (16, 25) is arranged in a magnetically conductive connection with a section (31) of the body of the first bearing ring (2), and
**in that** the magnetic circuit is closed substantially via the section (31) of the body of the first bearing ring (2).

2. Bearing according to Claim 1, **characterized in that** the claw ring has a body (16) in the form of a circular ring and having a radial slit (37).

3. Bearing according to Claim 1 or 2, **characterized in that** the claw ring has a recess (38) between two claws which are adjacent in the circumferential direction.

4. Bearing according to one of Claims 1 to 3, **characterized in that** one of the claws (10) of one of the claw rings (16) has a circumferential section in the form of a segment of a circle, and **in that** a radius of the circle segment corresponds to a radius of the circumference of the first bearing ring (2).

5. Bearing according to one of Claims 1 to 4, **characterized in that** the claw ring bears flat against a circumferential section of the first bearing ring.

6. Bearing according to Claim 5, **characterized in that** a cutout running peripherally in the circumferential direction is arranged on an end face (39) of the first bearing ring (2), and **in that** a section of the claw ring is arranged in the cutout.

7. Bearing according to one of Claims 1 to 6, **characterized in that** a magnetically conductive contact element to the adjoining section of the body of the bearing ring is arranged on the claw ring.

8. Bearing according to one of Claims 1 to 7, **characterized in that** a magnetically conductive contact element to the adjoining section of the body of the bearing ring is arranged on at least one of the magnetic poles, in particular on the magnetic ring.

9. Bearing according to Claim 7 or 8, **characterized in that** the magnetically conducive contact element comprises a liquid or paste-like adhesive, in particular an adhesive containing iron or ferrite particles.

10. Bearing according to one of Claims 1 to 9, further comprising a sensor (41), in particular a rotation speed sensor, to which power is applied from the power generation unit (6), the sensor (41) being fastened on the first bearing ring (2).

11. Bearing according to Claim 10, **characterized in that** the sensor (41) comprises a printed circuit board (42), and **in that** the printed circuit board (42) is arranged on a receptacle (28) for the induction coil (26).

12. Bearing according to Claim 10 or 11, **characterized in that** the sensor (41) comprises a rotation speed detection unit, a temperature sensing unit and a transmission and reception unit, to which power is applied from the power generation unit (6).

## Revendications

1. Palier présentant une première bague de palier (2) et une deuxième bague de palier (3) ainsi qu'une unité (6) de production d'énergie, l'unité (6) de production d'énergie comprenant :
une succession de pôles magnétiques (7, 8) qui entourent la périphérie de la deuxième bague de palier (3),
une première bague (16) de griffes fixée sur la première bague de palier (2) et présentant une succession de premières griffes (10, 11) qui entourent la périphérie de la première bague de palier (2),
une deuxième bague (25) de griffes fixée sur la première bague de palier (2) et présentant une succession de deuxièmes griffes (18, 19) qui entourent la périphérie de la première bague de palier (2) et
une bobine d'induction magnétique (26) disposée entre les deux bagues (16, 25) de griffes,
un circuit magnétique fermé entourant la bobine d'induction (26) en partant d'un premier pôle magnétique (7) pour passer sur une première griffe (10, 11) de la première bague (16) de griffes et sur une deuxième griffe (18, 19) de la deuxième bague (25) de griffes pour se fermer sur le deuxième pôle magnétique (8),
**caractérisé en ce que**
chacune des deux bagues (16, 25) de griffes est disposée en liaison magnétiquement conductrice avec une partie (31) du corps de la première bague de palier (2) et
**en ce que** le circuit magnétique est fermé essentiellement par l'intermédiaire de la partie (31) du corps de la première bague de palier (2).

2. Palier selon la revendication 1, **caractérisé en ce que** la bague de griffes présente un corps (16) en forme d'anneau circulaire et doté d'une fente radiale (37).

3. Palier selon les revendications 1 ou 2, **caractérisé en ce que** la bague de griffes présente une découpe (38) entre deux griffes voisines dans le sens de la périphérie.

4. Palier selon l'une des revendications 1 à 3, **caractérisé en ce que** l'une des griffes (10) de l'une des bagues (16) de griffes présente une partie périphérique en forme de segment de cercle et **en ce que** le rayon de segment de cercle correspond au rayon de la périphérie de la première bague de palier (2).

5. Palier selon l'une des revendications 1 à 4, **caractérisé en ce que** la bague de griffes repose à plat sur une partie de la périphérie de la première bague de palier.

6. Palier selon la revendication 5, **caractérisé en ce qu'**une découpe périphérique est disposée dans le sens de la périphérie sur une surface frontale (39) de la première bague de palier (2) et **en ce que** la bague de griffes est disposée en partie dans la découpe.

7. Palier selon l'une des revendications 1 à 6, **caractérisé en ce qu'**un élément de contact magnétiquement conducteur est disposé sur la bague de griffes en direction de la partie adjacente du corps de la bague de palier.

8. Palier selon l'une des revendications 1 à 7, **caractérisé en ce que** sur au moins l'un des pôles magnétiques, et en particulier sur l'anneau magnétique, un élément de contact magnétiquement conducteur est disposé vers la partie adjacente du corps de la bague de palier.

9. Palier selon les revendications 7 ou 8, **caractérisé en ce que** l'élément de contact magnétiquement conducteur comporte un adhésif liquide ou pâteux et en particulier un adhésif contenant des particules de fer ou de ferrite.

10. Palier selon l'une des revendications 1 à 9, comprenant en outre un capteur (41), en particulier un capteur de vitesse de rotation, alimenté en énergie par l'unité (6) de production d'énergie, le capteur (41) étant fixé sur la première bague de palier (2).

11. Palier selon la revendication 10, **caractérisé en ce que** le capteur (41) présente une carte de circuit (42) et **en ce que** la carte de circuit (42) est disposée sur un logement (28) prévu pour la bobine d'induction (26).

12. Palier selon les revendications 10 ou 11, **caractérisé en ce que** le capteur (41) comporte une unité de saisie de vitesse de rotation, une unité de détection de température ainsi qu'une unité d'émission et de réception qui sont alimentées en énergie par l'unité (6) de production d'énergie.
